# EUROPEAN PATENT SPECIFICATION

(11) **EP 2 255 673 B1**
(45) Date of publication and mention of the grant of the patent: **05.04.2017**
(21) Application number: 10164038.1
(22) Date of filing: 27.05.2010
(51) Int. Cl.: A23G 9/28, A23G 9/22

(54) **MACHINE FOR MAKING ICE CREAM PRODUCTS**
MASCHINE ZUR HERSTELLUNG VON SPEISEEISPRODUKTEN
MACHINE POUR FABRIQUER DES PRODUITS DE CRÈMES GLACÉES

(30) Priority: 28.05.2009 IT BO20090349
(43) Date of publication of application: 01.12.2010
(73) Proprietor: Carpigiani Group - ALI S.p.A., 40011 Anzola Dell'Emilia (BO) (IT)
(72) Inventor: Lazzarini, Roberto, 40011 Anzola Dell'Emilia (Bologna) (IT); Cocchi, Gino, 40011 Anzola Dell'Emilia (Bologna) (IT); Zaniboni, Gianni, 40011 Anzola Dell'Emilia (Bologna) (IT)
(74) Representative: Bianciardi, Ezio

(56) References cited:
- EP-A- 1 949 794
- WO-A-03/022067
- DE-A1- 19 802 852
- FR-A- 2 185 366
- US-A1- 2003 129 289

## Description

This invention relates to a machine for making ice cream products.

This invention is for application in particular in the sector of home-made products and is used for pouring the product directly into collecting tubs to be displayed in ice cream shop counters or stored in a refrigerator.

More particularly, this invention relates to a machine for making ice creams and the like, of the type comprising a horizontal mixing and cooling unit to which an inspection door is connected, the latter comprising a dispensing hole for putting the mixing and cooling unit in fluid communication with the outside environment. A dispensing door selectively opens and closes the dispensing hole and comprises a plate, comprising an opening, able to rotate relative to the inspection door in such a way that the dispensing hole can be selectively positioned opposite the opening. A prior art machine of this type is described in patent EP 1949794. Machines of this type are also disclosed in documents DE 19802852 A1, FR 2185366, WO 03/022067 A and US 2003/129289 A1.

The mixing and cooling unit is designed to mix, cool and blend together a plurality of ingredients to form a cream for ice cream, mousse, custards, fruit substitutes, crushed-ice drinks and the like, for example even creamy masses containing relatively large solid pieces.

The ingredients are placed in the mixing and cooling unit through an opening put in fluid communication with the mixing and cooling unit.

As indicated above, the finished product is made available by aligning the dispensing hole and the opening in the rotary plate.

To prevent a user from accidentally inserting a hand or an object in the mixing and cooling unit through the dispensing hole and therefore to prevent machine user injury or damage to the machine, the opening in the plate is fitted with a dense-mesh grille.

In this way, when the opening in the plate and the dispensing hole are aligned, direct access to the mixing and cooling unit is prevented.

However, in the prior art machines briefly described above, it is often not possible to dispense servings of finished product containing solid pieces such as cereals, pieces of fruit, dried fruit and the like.

The size of the solid pieces may be such that they cannot pass through the protective grille and remain in the mixing and cooling unit.

Moreover, even if the size of the solid pieces is such that they can pass through the grille, the solid pieces may break up as they pass through it. Moreover, when the opening in the rotary plate is not aligned with the dispensing hole (that is to say, in the configuration in which the finished product is not dispensed), dust or dirt may build up on the grille covering the opening, contaminating the finished product which is subsequently dispensed.

In this context, the aim of this invention is to overcome the above-mentioned disadvantages.

In particular, this invention aims to provide a machine for making the products listed above which allows the dispensing of a finished product consisting of a creamy mass containing solid pieces which are relatively large in size.

Another aim of this invention is to propose a machine for making ice cream products which prevents possible contamination of the product dispensed.

Accordingly, this invention achieves these aims with a machine for making ice cream products, comprising the features described in one or more of the appended claims.

The technical features of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figure 1 is a perspective view of a machine for making ice cream products in accordance with this invention;
- Figure 2 is a perspective view of the machine of Figure 1 in a first operating configuration;
- Figure 3 is a perspective view of the machine of Figure 1 in a second operating configuration;
- Figure 4 is a cross-section according to the plane IV - IV of the machine of Figure 1; and
- Figure 5 is an enlarged exploded view of a detail of the machine of Figure 1.

With reference to the accompanying drawings, the numeral 1 denotes as a whole a machine in accordance with this invention for making ice cream products, cake and pastry fillings and the like of the type listed above, for example ice cream, mousse, custards, fruit substitutes, crushed-ice drinks and the like, creamy masses containing relatively large solid pieces.

The machine 1 is of the type with a horizontal mixing and cooling unit 2 and comprises a containment frame 3 housing the mixing and cooling unit 2, a plurality of drive parts and control means for the mixing and cooling unit (of the known type and therefore not illustrated).

The frame 3 comprises four lateral walls 4, one upper wall 5 and one base wall (not visible in the accompanying drawings).

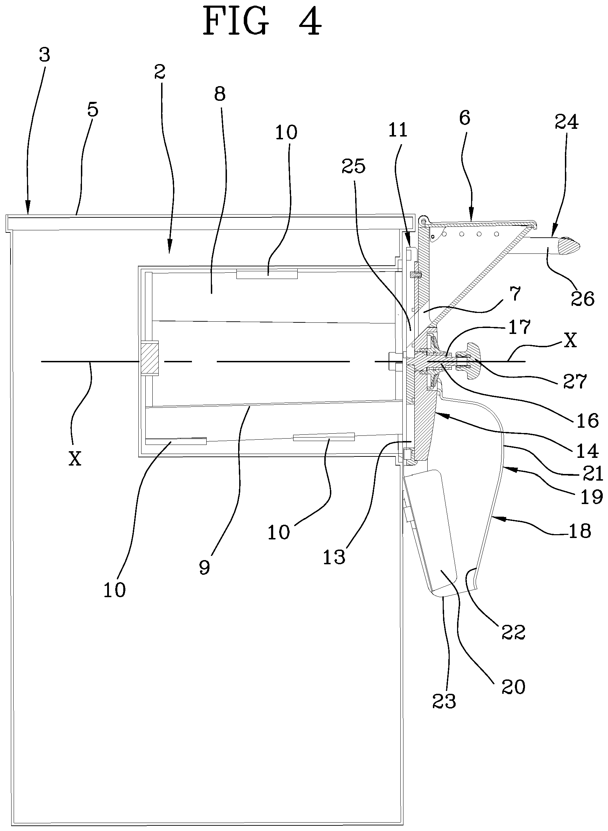

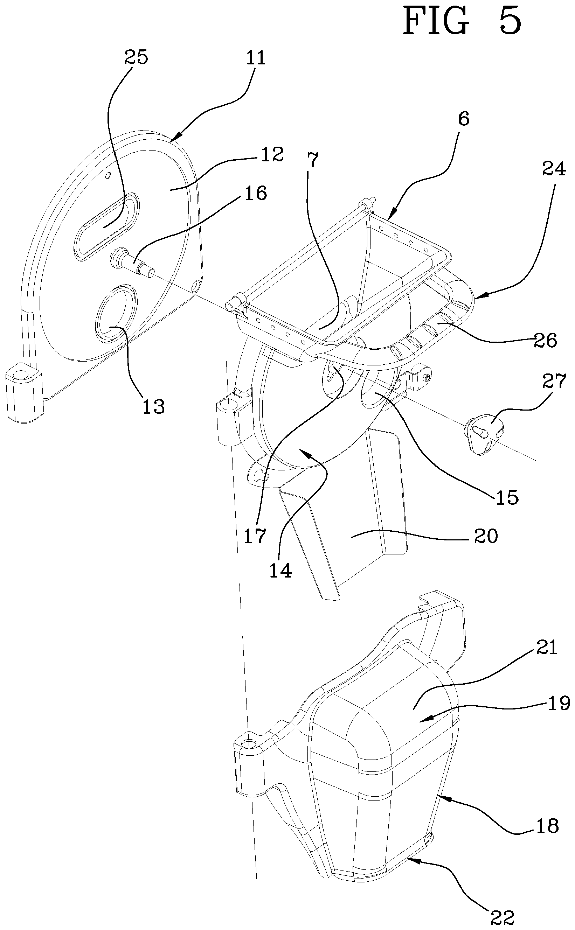

The machine 1 comprises a loading hopper 6, put in fluid communication through an opening 7 (Figures 4 and 5) with the mixing and cooling unit 2, for inserting both liquid and solid ingredients which must be mixed and cooled by the mixing and cooling unit 2 for making an ice cream shop product.

The mixing and cooling unit 2 comprises a refrigerated chamber 8, substantially cylindrical and made of stainless steel, having a substantially horizontal axis of extension X (Figure 4). Inside the chamber 8 there is a motor-driven stirrer 9 able to rotate about the horizontal axis of extension X of the chamber 8 and comprising a plurality of blades 10. Rotation of the stirrer 9, and therefore of the blades 10, mixes the ingredients inside the mixing and cooling unit and pushes the creamy mass of ice cream being formed, in which solid pieces such as cereal, pieces of fruit and the like are dispersed, towards one end of the mixing and cooling unit 2 chamber 8.

Said end of the mixing and cooling chamber 8 is sealed by an inspection door 11 designed to retain the ice cream in the mixing and cooling unit 2 and to allow inspection of the inside of the mixing and cooling chamber 8 for maintenance and/or sanitising.

For this purpose, the size of the inspection door 11 is equal to or greater than the transversal size of the mixing and cooling chamber 8, thus allowing easy and complete access to the chamber.

In particular, the inspection door 11 is substantially vertical, is located on one of the lateral walls 4 of the containment frame 3 and is hinged to the frame in such a way that the door can open and close. A fastening bolt (not illustrated) holds the inspection door 11 in the closed position.

The inspection door 11 has a disk-shaped portion 12 and comprises a dispensing hole 13 (Figures 4 and 5) for the ice cream containing solid products made by the mixing and cooling unit 2.

The dispensing hole 13 allows the dispensing of ice cream without the need to open the inspection door 11 which, as described, is too large to allow controlled dispensing of the ice cream.

The dispensing hole 13 is therefore much smaller than the inspection door 11.

The dispensing hole 13 can be accessed through a dispensing door 14 which allows the dispensing hole 13 to be closed and opened each time servings of ice cream must be dispensed.

In particular, the dispensing door 14 is directly opposite the inspection door 11, extends vertically and can rotate relative to the latter.

A through opening 15 is made in the dispensing door 14, in such a way that, after rotation of the dispensing door the through opening may or may not be opposite the dispensing hole 13.

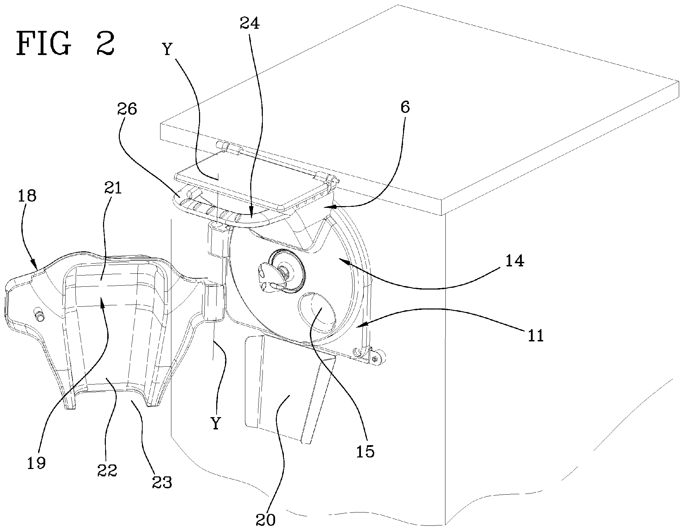

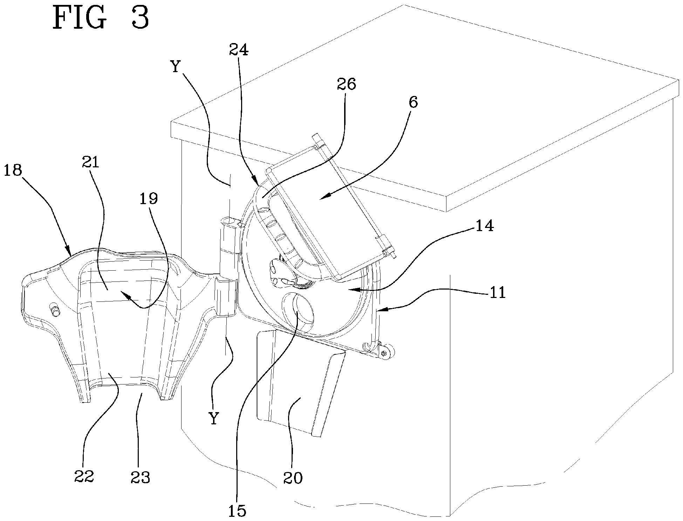

When the through opening 15 is opposite the dispensing hole 13 the ice cream can flow out of the mixing and cooling chamber 8 towards the outside environment (Figure 3), whilst when the through opening 15 is not opposite the dispensing hole 13 the ice cream cannot flow towards the outside environment (Figure 2).

More particularly, the dispensing door 14 and the inspection door 11 are rotatably connected to each other at the respective centres of symmetry which lie along the axis of extension X of the mixing and cooling unit 2.

For this purpose, as illustrated in Figures 4 and 5, the inspection door 11 is fitted with a pin 16 extending from its centre towards the dispensing door 14 and rotatably engaging in a central hole 17 in the dispensing door 14.

It should be noticed that to allow the dispensing of solid pieces contained in the ice cream, neither the dispensing hole 13 nor the through opening 15 is fitted with any type of grille.

Advantageously, to prevent direct access to the mixing and cooling unit 2 via the through opening 15 (which could result in injury to the user or damage to the mixing and cooling unit), the machine 1 comprises a cover element 18 comprising a half-shell-shaped portion 19 which is opposite the through opening 15, with the concave side towards the dispensing door 14.

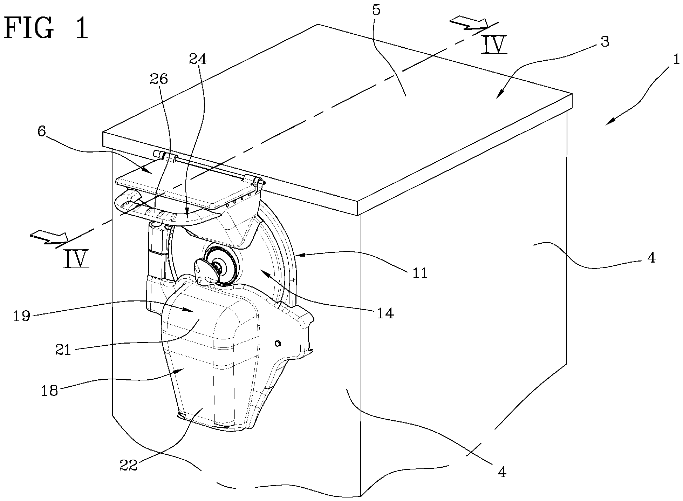

The cover element 18 is opposite the through opening 15 in both of the operating positions of the dispensing door 14, that is to say, both when the through opening 15 is aligned with the dispensing hole 13 and when the through opening 15 is not aligned with the dispensing hole 13 (as shown in Figure 1).

In this way, irrespective of the configuration of the dispensing door 14, the passages through which the finished products passes are always shielded by the cover element 18, minimising any possible contamination of the product dispensed.

The machine comprises a chute 20 located below the dispensing hole 13. The chute 20 operates in conjunction with the cover element 18, forming a channel for the passage of the product dispensed. In particular, the cover element 18 covers both a portion of the dispensing door 14 which comprises the through opening 15 and the portion of the machine extending below the dispensing door 14.

As Figures 1 and 4 show, the half-shell-shaped portion 19 of the cover element 18 comprises a first end 21 surrounding the portion of the dispensing door 14 comprising the through opening 15 and a second end 22, opposite the first end 21, comprising an opening 23 for the passage of the product dispensed.

The second end 22 extends over the portion of machine located below the dispensing door 14.

Preferably, as shown in Figures 2 and 3, the cover element 18 can rotate about an axis Y perpendicular to the axis of rotation X of the dispensing door 14, allowing direct access to the through opening 15 and therefore allowing any maintenance work required.

In order to be able to start and stop dispensing of the ice cream through the dispensing hole 13, and therefore to be able to rotate the dispensing door 14 relative to the inspection door 11, the dispensing door 14 comprises movements means 24. Preferably, the above-mentioned loading hopper 6 is connected to the dispensing door 14 in such a way that the opening 7 passes through the dispensing door 14. To allow the ingredients to flow into the mixing and cooling chamber 8, the inspection door 11 comprises an opening 25 (Figures 4 and 5) which can be positioned opposite the opening 7 in the dispensing door 14.

The loading hopper 6 can therefore be rotated about the axis X about which the dispensing door 14 rotates.

Preferably, the opening 7 and the opening 25 remain at least partly opposite each other even after rotation of the loading hopper 6.

Preferably, when the dispensing hole 13 and the through opening 15 are not aligned, the loading hopper 6 is positioned substantially horizontally (as shown in figure 2) and the openings 7 and 25 are precisely opposite each other.

When the dispensing hole 13 and the through opening 15 are aligned, the loading hopper 6 is at an angle (as shown in Figure 3) and the openings 7 and 25 are only partly opposite each other.

As shown in the accompanying drawings, the movement means 24 comprise a handle 26 which can be gripped by an operator.

The handle 26 is preferably connected to the loading hopper 6.

In particular, the handle 26 and therefore the loading hopper 6 are connected to an upper portion of the dispensing door 14, that is to say, a portion of the dispensing door 14 opposite the portion comprising the through opening 15 (see Figures 2 and 3).

It should be noticed that to guarantee that the dispensing door 14 remains in close contact with the inspection door 11, a bushing (not illustrated) is inserted in the central hole 17 of the dispensing door 14 and engages with the central pin 16 of the inspection door 11.

A clamping element 27, in particular a knob, is inserted in the bushing and stably connected, for example by screwing, to the central pin 16 of the inspection door 11 (Figures 4 and 5).

It should be noticed that the clamping element 27 prevents dispensing door 14 movement along the axis X, guaranteeing that the dispensing door remains in close contact with the inspection door 11 and preventing ice cream from leaking between the inspection door 11 and the dispensing door 14.

The invention achieves the preset aims.

The cover element 18, comprising a half-shell-shaped portion 19 which is opposite the through opening 15 and with its concave side towards the dispensing door 14, prevents direct access to the mixing and cooling chamber 8 from the outside, thus preventing possible injury to the operator or damage to the mixing and cooling unit.

Moreover, the cover element 18, covering the through opening 15 irrespective of the through opening operating position, prevents possible contamination of the product dispensed.

The invention described above is susceptible of industrial application and may be modified and adapted in several ways without thereby departing from the scope of the inventive concept. Moreover, all details of the invention may be substituted by technically equivalent elements.

## Claims

1. A machine for making ice cream products comprising a mixing and cooling unit (2) with a horizontal axis (X), an inspection door (11) connected to one end of the mixing and cooling unit (2), allowing access to the inside of it, the inspection door (11) comprising a dispensing hole (13) for putting the mixing and cooling unit (2) in fluid communication with the outside environment, a dispensing door (14) rotating relative to the inspection door (11) between a dispensing position and a home position and comprising a through opening (15) which can be positioned opposite the dispensing hole (13) for selectively opening and closing the latter; **characterised in that** it comprises a cover element (18) comprising a half-shell-shaped portion (19) which is opposite the through opening (15) and with its concave side towards the dispensing door (14), **the cover element (18) being able to rotate about an axis (Y) perpendicular to the axis of rotation of the dispensing door (14), allowing direct access to the through opening (15); and in that it comprises a chute (20) located below the dispensing hole (13), the chute (20) operating in conjunction with the cover element (18), forming a channel for the passage of the product dispensed.**

2. The machine according to claim 1, **characterised in that** the cover element (18) is opposite the through opening (15) in both of the dispensing door (14) operating positions.

3. The machine according to any of the foregoing claims, **characterised in that** the half-shell-shaped portion (19) of the cover element (18) comprises a first end (21) surrounding a portion of the dispensing door (14) comprising the through opening (15) and a second end (22), opposite the first end (21), comprising an opening (23) for the passage of the product dispensed.

4. The machine according to any of the foregoing claims, **characterised in that** it comprises a loading hopper (6) put in fluid communication with the mixing and cooling unit (2) for feeding liquid and solid ingredients into the mixing and cooling unit (2).

5. The machine according to claim **4**, **characterised in that** the loading hopper (6) is integral with the dispensing door (14) in a distal position relative to the through opening (15).

6. The machine according to any of the foregoing claims, **characterised in that** the dispensing door (14) comprises movement means (24) for rotating it relative to the inspection door (11).

7. The machine according to claims **5** and **6**, **characterised in that** the movement means (24) comprise a handle (26) integral with the loading hopper (6) for rotating the loading hopper and the dispensing door (14) relative to the inspection door (11).

8. The machine according to clam **6**, **characterised in that** the inspection door (11) comprises a flat, substantially vertical wall; the dispensing door (14) comprising a flat, substantially vertical wall which is rotatably connected to the flat wall of the inspection door (11).

9. The machine according to one or more of the foregoing claims, **characterised in that** the inspection door (11) and the dispensing door (14) are substantially disk-shaped and are rotatably connected to each other at the centre of the disks.

10. The machine according to any of the foregoing claims, **characterised in that** it comprises a containment frame (3) for the horizontal mixing and cooling unit (2); the inspection door (11) being connected to a wall (4) of the frame (3) and being able to open relative to it.

## Patentansprüche

1. Maschine zur Herstellung von Speiseeisprodukten, umfassend eine Misch- und Kühleinheit (2) mit einer horizontalen Achse (X), eine Inspektionstür (11), verbunden mit einem Ende der Misch- und Kühleinheit (2), die den Zugang zu deren Innenseite ermöglicht, wobei die Inspektionstür (11) ein Ausgabeloch (13) umfasst, um die Misch- und Kühleinheit (2) in Fluidkommunikation mit der äußeren Umgebung zu setzen, eine Ausgabetür (14), die sich relativ zur Inspektionstür (11) zwischen einer Ausgabeposition und einer Ausgangsposition dreht und eine Durchführungsöffnung (15) umfasst, die entgegengesetzt zum Ausgabeloch (13) positioniert werden kann, um dieses selektiv zu öffnen und zu schließen, **dadurch gekennzeichnet, dass** sie ein Abdeckelement (18) umfasst, umfassend einen halbschalenförmigen Abschnitt (19), der gegenständig zur Durchführungsöffnung (15) angeordnet ist, wobei dessen konkave Seite zur Ausgabetür (14) zeigt, wobei das Abdeckelement (18) um eine Achse (Y) drehbar ist, die senkrecht zur Rotationsachse der Ausgabetür (14) angeordnet ist und den direkten Zugang zur Durchführungsöffnung (15) erlaubt, und dadurch, dass sie einen Auslaufstutzen (20) umfasst, der unter dem Ausgabeloch (13) angeordnet ist, wobei der Auslaufstutzen (20) in Verbindung mit dem Abdeckelement (18) arbeitet und einen Kanal für den Durchlauf des ausgegebenen Produkts bildet.

2. Maschine nach Anspruch 1, **dadurch gekennzeichnet, dass** das Abdeckelement (18) in beiden Betriebspositionen der Ausgabetür (14) gegenständig zur Durchführungsöffnung (15) angeordnet ist.

3. Maschine nach einem der vorhergehenden Ansprüche, **dadurch gekennzeichnet, dass** der halbschalenförmige Abschnitt (19) des Abdeckelements (18) ein erstes Ende (21) umfasst, das einen Abschnitt der Ausgabetür (14) umgibt, umfassend die Durchführungsöffnung (15), und ein zweites Ende (22), das gegenständig zum ersten Ende (21) angeordnet ist, umfassend eine Öffnung (23) für den Durchlauf des ausgegebenen Produkts.

4. Maschine nach einem der vorhergehenden Ansprüche, **dadurch gekennzeichnet, dass** sie einen Fülltrichter (6) umfasst, der in Fluidkommunikation mit der Misch- und Kühleinheit (2) gesetzt ist, um der Misch- und Kühleinheit (2) flüssige und feste Zutaten zuzuführen.

5. Maschine nach Anspruch 4, **dadurch gekennzeichnet, dass** der Fülltrichter (6) fest mit der Ausgabetür (14) in einer distalen Position relativ zur Durchführungsöffnung (15) verbunden ist.

6. Maschine nach einem der vorhergehenden Ansprüche, **dadurch gekennzeichnet, dass** die Ausgabetür (14) Bewegungsmittel (24) umfasst, um sie relativ zur Inspektionstür (11) zu drehen.

7. Maschine nach Anspruch 5 und 6, **dadurch gekennzeichnet, dass** die Bewegungsmittel (24) einen Handgriff (26) umfassen, der fest mit dem Fülltrichter (6) verbunden ist, um den Fülltrichter und die Ausgabetür (14) relativ zur Inspektionstür (11) zu drehen.

8. Maschine nach Anspruch 6, **dadurch gekennzeichnet, dass** die Inspektionstür (11) eine flache, im Wesentlichen vertikale Wand umfasst, und die Ausgabetür (14) eine flache, im Wesentlichen vertikale Wand umfasst, die drehbar mit der flachen Wand der Inspektionstür (11) verbunden ist.

9. Maschine nach einem oder mehreren der vorhergehenden Ansprüche, **dadurch gekennzeichnet, dass** die Inspektionstür (11) und die Ausgabetür (14) im Wesentlichen scheibenförmig und in der Mitte der Scheiben drehbar miteinander verbunden sind.

10. Maschine nach einem der vorhergehenden Ansprüche, **dadurch gekennzeichnet, dass** sie einen Halterahmen (3) für die horizontale Misch- und Kühleinheit (2) umfasst, und die Inspektionstür (11) mit einer Wand (4) des Rahmens (3) verbunden ist und relativ dazu geöffnet werden kann.

## Revendications

1. Machine pour fabriquer des produits de crème glacée comprenant une unité de mélange et de refroidissement (2) dotée d'un axe horizontal (X), une porte de visite (11), reliée à une extrémité de l'unité de mélange et de refroidissement (2), permettant d'accéder à l'intérieur de celle-ci, la porte de visite (11) comprenant un orifice de distribution (13) servant à mettre l'unité de mélange et de refroidissement (2) en communication fluidique avec l'environnement extérieur, une porte de distribution (14) tournant par rapport à la porte de visite (11) entre une position de distribution et une position initiale et comprenant une ouverture passante (15) pouvant être positionnée à l'opposé de l'orifice de distribution (13) pour sélectivement ouvrir et fermer cette dernière ; **caractérisée en ce qu'**elle comprend un élément de recouvrement (18) comprenant une partie en forme de demi-coque (19) étant à l'opposé de l'ouverture passante (15) et avec son côté concave vers la porte de distribution (14), l'élément de recouvrement (18) pouvant tourner autour d'un axe (Y) perpendiculaire à l'axe de rotation de la porte de distribution (14), permettant un accès direct à l'ouverture passante (15) ; et **en ce qu'**elle comprend une glissière (20) située au-dessous de l'orifice de distribution (13), la glissière (20), fonctionnant conjointement avec l'élément de recouvrement (18), formant un canal pour le passage du produit distribué.

2. Machine selon la revendication 1, **caractérisée en ce que** l'élément de recouvrement (18) se trouve à l'opposé de l'ouverture passante (15) au cours des deux positions de fonctionnement de la porte de distribution (14).

3. Machine selon l'une quelconque des revendications précédentes, **caractérisée en ce que** la partie en forme de demi-coque (19) de l'élément de recouvrement (18) comprend une première extrémité (21) entourant une partie de la porte de distribution (14) comprenant l'ouverture passante (15) et une seconde extrémité (22), opposée à la première extrémité (21), comprenant une ouverture (23) pour le passage du produit distribué.

4. Machine selon l'une quelconque des revendications précédentes, **caractérisée en ce qu'**elle comprend une trémie de chargement (6) mise en communication fluidique avec l'unité de mélange et de refroidissement (2) pour alimenter des ingrédients liquides et solides dans l'unité de mélange et de refroidissement (2).

5. Machine selon la revendication 4, **caractérisée en ce que** la trémie de chargement (6) est solidaire de la porte de distribution (14) dans une position distale par rapport à l'ouverture passante (15).

6. Machine selon l'une quelconque des revendications précédentes, **caractérisée en ce que** la porte de distribution (14) comprend des moyens de déplacement (24) pour la faire tourner par rapport à la porte de visite (11).

7. Machine selon les revendications 5 et 6, **caractérisée en ce que** les moyens de déplacement (24) comprennent une poignée (26) solidaire de la trémie de chargement (6) pour faire tourner la trémie de chargement et la porte de distribution (14) par rapport à la porte de visite (11).

8. Machine selon la revendication 6, **caractérisée en ce que** la porte de visite (11) comprend une paroi plate substantiellement verticale ; la porte de distribution (14) comprenant une paroi plate substantiellement verticale étant reliée de façon rotative à la paroi plate de la porte de visite (11).

9. Machine selon l'une ou plusieurs des revendications précédentes, **caractérisée en ce que** la porte de visite (11) et la porte de distribution (14) ont une forme substantiellement discoïdale et sont reliées l'une à l'autre, de façon rotative, au centre des disques.

10. Machine selon l'une quelconque des revendications précédentes, **caractérisée en ce qu'**elle comprend un châssis de contenance (3) destiné à l'unité de mélange et de refroidissement horizontale (2) ; la porte de visite (11) étant reliée à une paroi (4) du châssis (3) et pouvant s'ouvrir par rapport à celle-ci.
